# DEMANDE DE BREVET EUROPEEN

(11) **EP 2 081 379 A1**
(43) Date de publication de la demande: **22.07.2009**
(21) Numéro de dépôt: 08291248.6
(22) Date de dépôt: 29.12.2008
(51) Int. Cl.: H04N 5/761

(54) **Système et procédé de programmation à distance d'un adjoint de poste de télédiffusion**

(30) Priorité: 16.01.2008 FR 0800225
(71) Demandeur: Societé Française du Radiotéléphone, 75008 Paris (FR)
(72) Inventeur: Baudy, Marc, 92400 Courbevoie (FR)
(74) Mandataire: Debay, Yves

(57) **Abrégé**

La présente invention concerne un dispositif de contrôle de programmation à distance d'un adjoint (5) de poste de télédiffusion relié à un réseau IPTV permettant la réception d'un flux média à diffuser par le poste de télédiffusion, qui comprend un terminal (1) de communication relié à un réseau Internet (6) par l'intermédiaire d'une interface web, un serveur d'une plateforme (2) de programmation et de communication entre au moins un adjoint de poste de télédiffusion et un terminal de communication qui télécommande l'adjoint de poste de télédiffusion, la plateforme intégrant :
- un moyen d'identification (3) de l'utilisateur du terminal,
- un moyen d'identification (4) d'un adjoint de poste destiné à recevoir au moins un ordre du terminal de communication,
- une interface de transfert et/ou de traduction d'au moins un ordre d'enregistrement transmis par le terminal de communication et des réponses aux ordres de l'adjoint de poste de télédiffusion.

## Description

La présente invention se rapporte au domaine des dispositifs de programmation à distance et plus particulièrement au domaine des dispositifs de programmation à distance faisant intervenir un réseau.

Les technologies des multimédias connaissent actuellement le développement des adjoints de poste de télédiffusion, par exemple de poste de télévision aussi appelés décodeurs en anglais *« Set Top Box* ». Ces adjoints de poste de télédiffusion sont des adaptateurs qui permettent la transformation d'un signal externe en un contenu souvent crypté capable d'être affiché, notamment sur l'écran d'un téléviseur. Ce contenu peut alors être de la vidéo, de l'audio, des pages web, des jeux, etc. Certains de ces adjoints de poste sont formés par des routeurs qui permettent de fournir un accès à la télévision par ADSL ainsi qu'à des services vidéo à la demande. Ces adjoints, dans le cas de PVR (*Personal Video Recorder*), permettent également d'effectuer un enregistrement du contenu d'un flux média reçu sur un disque dur propre au PVR ou à l'adjoint de poste ou bien sur un média particulier par exemple de type DVD (*Digital Video Disc*), de réaliser un décalage temporel de la lecture (*time-shifting*) qui permet un contrôle de la lecture d'un flux média réceptionné en direct et enfin d'inscrire le flux média reçu sur un support, par exemple un DVD.

Ces adjoints de poste de télédiffusion sont généralement susceptibles d'être programmé à l'avance par un utilisateur pour réaliser l'enregistrement d'un flux média, par exemple vidéo, qui sera diffusé en l'absence de l'utilisateur. Cependant, les interfaces actuelles de programmation imposent que l'utilisateur connaisse le flux média qu'il souhaite enregistrer avant son départ ou dans le cas contraire il se trouve dans l'obligation de demander à une tierce personne d'effectuer cette programmation, voire de revenir pour réaliser l'enregistrement. En effet, les commandes de programmation se trouvent généralement disposées physiquement sur l'adjoint de poste de télédiffusion ou alors sur une télécommande dont la portée est réduite à quelques mètres.

La présente invention a pour objet de supprimer un ou plusieurs inconvénients de l'art antérieur et notamment de proposer une solution qui permette de réaliser la programmation d'un adjoint de poste de télédiffusion à distance.

Cet objectif est atteint grâce à un système de contrôle de programmation à distance d'au moins un adjoint de poste de télédiffusion, l'adjoint étant relié à un réseau IPTV (*Internet Protocol TeleVision*) permettant la réception d'un flux média à diffuser par le poste de télédiffusion, le système comprenant au moins un terminal de communication relié à un réseau de type Internet par l'intermédiaire d'une interface web, caractérisé en ce que le système comprend au moins un serveur formant une plateforme de programmation et de communication entre au moins l'adjoint de poste de télédiffusion et le terminal de communication qui télécommande l'adjoint de poste de télédiffusion, la plateforme intégrant :
- un moyen d'identification de l'utilisateur du terminal de communication qui communique avec le serveur,
- un moyen d'identification d'un adjoint de poste de télédiffusion destiné à recevoir au moins un ordre du terminal de communication,
- une interface de transfert et/ou de traduction d'au moins un ordre d'enregistrement transmis par le terminal de communication et des réponses de l'adjoint de poste de télédiffusion aux ordres,
et en ce que l'adjoint de poste de télédiffusion est relié à la plateforme par une interface réseau et communique avec la plateforme au moyen d'une adresse IP (*Internet Protocol*) statique.

Selon une variante de l'invention, le système de contrôle de programmation à distance est **caractérisé en ce que** la plateforme est formée par une plateforme web qui comprend une interface sur laquelle l'utilisateur du terminal de communication est en mesure de pouvoir au moins :
- s'identifier, et/ou
- rechercher et/ou sélectionner un flux média dont les caractéristiques de la diffusion programmée par un média sont enregistrées dans une base de données de la plateforme comprenant l'ensemble des flux média programmés susceptibles d'être enregistrés par l'adjoint de poste de télédiffusion, et/ou
- commander un ordre à exécuter par la plateforme de programmation d'un adjoint de poste de télédiffusion identifié pour l'enregistrement d'un programme diffusé par un média, et/ou
- modifier dans la plateforme les ordres de programmation correspondant à l'adjoint de poste de télédiffusion en attente d'être exécuté, et/ou
- valider et/ou supprimer au moins un fichier enregistré dans le moyen mémoire destiné à recevoir l'enregistrement de flux média.

Selon une autre variante de l'invention, le système de contrôle de programmation à distance est **caractérisé en ce que** le moyen d'identification du terminal de communication est formé par un dispositif d'identification unique SSO (*Single Sign On*) qui permet la récupération du numéro MSISDN (*Mobile Station Integrated Service Digital network Number*) de l'utilisateur du terminal.

Selon une autre variante de l'invention, le système de contrôle de programmation à distance est **caractérisé en ce que** le moyen d'identification de l'adjoint de poste de télédiffusion est formé par un dispositif intégrant une base de données permettant une bijection entre un identifiant de l'utilisateur d'un terminal de communication et l'identifiant d'un adjoint de poste de télédiffusion formé par son adresse IP.

Selon une autre variante de l'invention, le système de contrôle de programmation à distance est **caractérisé en ce que** la base de données est contrôlée, gérée et alimentée par l'opérateur proposant le dispositif de contrôle de programmation à distance.

Selon une autre variante de l'invention, le système de contrôle de programmation à distance est **caractérisé en ce que** l'adjoint de poste de télédiffusion intègre un dispositif de gestion des conflits de programmation associé à un moyen mémoire de l'adjoint de poste de télédiffusion.

Selon une autre variante de l'invention, le système de contrôle de programmation à distance est **caractérisé en ce que** l'adjoint de poste de télédiffusion intègre un dispositif de gestion des conflits de programmation associé à un moyen mémoire de l'adjoint de poste de télédiffusion.

Selon une particularité de l'invention, le terminal utilisable dans un système de contrôle de programmation à distance selon l'invention comprenant au moins un moyen d'affichage d'informations, un clavier formant une interface de commande pour l'utilisateur, est caractérisé en ce que le terminal comprend :
- un moyen de communication Internet avec une plateforme de programmation d'un adjoint de poste de télédiffusion,
- un dispositif de navigation et/ou de sélection d'un élément dans au moins une base de données de la plateforme,
- un moyen de commande et/ou de validation d'un ordre de programmation d'enregistrement d'un flux média.

Selon une particularité de l'invention, l'adjoint de poste de télédiffusion utilisable dans un système de contrôle de programmation comprenant au moins une interface de connexion à un réseau IPTV pour la réception d'un flux média, un moyen de lecture et/ou un moyen d'enregistrement et/ou un moyen d'effacement d'un flux média sur un moyen mémoire amovible ou intégré à l'adjoint de poste de télédiffusion, est **caractérisé en ce que** l'adjoint de poste de télédiffusion comprend :
- une interface de communication formée par une connexion avec un réseau ADSL (Asymmetric Digital Subscriber Line) et identifiée par une adresse IP statique,
- un moyen mémoire pour stocker les enregistrements programmés,
- un moyen de reconnaissance et d'analyse d'ordres de programmation d'enregistrement reçus via l'interface de communication,
- un dispositif de gestion des conflits de programmation.

Selon une variante de l'invention, l'adjoint de poste de télédiffusion est **caractérisé en ce que** le dispositif de gestion de conflits de programmation comprend :
- un moyen de comparaison de l'ordre de programmation d'enregistrement reçu avec au moins un enregistrement programmé dans le moyen mémoire,
- un moyen de comparaison de la mémoire nécessaire pour exécuter l'enregistrement de l'ordre de programmation reçu avec la mémoire disponible sur l'adjoint de poste pour recevoir l'enregistrement sur le moyen mémoire,
- un moyen de rédaction et/ou d'émission d'un rapport définissant la présence et/ou l'absence d'un conflit.

Selon une particularité de l'invention, la plateforme de programmation utilisable dans un système de contrôle de programmation, formée par un ou plusieurs serveurs, **caractérisé en ce que** la plateforme comprend :
- une interface de communication formée par une connexion Internet avec au moins un terminal manipulé par un utilisateur,
- une interface de communication formée par une connexion via un réseau ADSL avec au moins un adjoint de poste de télédiffusion,
- un dispositif de reconnaissance du destinataire d'un ordre de programmation d'enregistrement à partir de l'identification de l'utilisateur émetteur de l'ordre, ce dispositif comprenant au moins un moyen d'identification de l'utilisateur du terminal de communication qui communique avec la plateforme et un moyen d'identification d'un adjoint de poste de télédiffusion intégrant une base de données permettant une bijection entre l'identifiant de l'utilisateur du terminal et l'identifiant d'un adjoint de poste de télédiffusion formé par son adresse IP.

Selon une variante de l'invention, la plateforme de programmation est **caractérisée en ce que** la plateforme intègre un flux EPG (*Electronic Program Guide*) formant une interface sur laquelle un utilisateur du terminal de communication est susceptible de :
- s'identifier, et/ou
- rechercher et/ou sélectionner un flux média dont les caractéristiques de la diffusion programmée par un média sont enregistrées dans une base de données de la plateforme (2) comprenant l'ensemble des flux média programmés susceptibles d'être enregistrés par un adjoint (5) de poste de télédiffusion, et/ou
- commander un ordre à exécuter par la plateforme de programmation d'un adjoint (5) de poste de télédiffusion identifié pour l'enregistrement d'un programme diffusé par un média, et/ou
- modifier dans la plateforme les ordres de programmation correspondant à l'adjoint de poste de télédiffusion en attente d'être exécuté, et/ou
- valider et/ou supprimer au moins un fichier enregistré dans le moyen mémoire destiné à recevoir l'enregistrement de flux média.
- Selon une variante de l'invention, la plateforme de programmation est **caractérisée en ce que** l'interface comprend :
   - un moyen de visualisation d'une recherche d'un flux média particulier à partir d'au moins un mot-clé,
   - un moyen de visualisation d'une description d'un flux média recherché,
   - un moyen de recherche et de visualisation des flux média diffusés au cours d'au moins une période sélectionnée ou sur un canal sélectionné,
   - un moyen de visualisation d'une liste détaillée des programmes de diffusion de flux média par canal.

Un autre objectif de l'invention est de proposer un procédé permettant la mise en oeuvre du système et des différents dispositifs de l'invention.

Cet objectif est atteint grâce à un procédé de contrôle de programmation à distance mettant en jeu au moins un système de contrôle de programmation à distance selon l'invention, **caractérisé en ce que** le procédé comprend au moins :
- une étape d'émission d'au moins un ordre de programmation d'un enregistrement depuis un terminal connecté et identifié par la plateforme de programmation et destiné à la plateforme,
- une étape de transfert de l'ordre de programmation d'enregistrement à l'adjoint de poste de télédiffusion,
- une étape de vérification de la possibilité d'exécution de l'ordre de programmation par le dispositif de gestion de conflits de programmation,
- une étape d'émission d'un rapport sur le statut de l'ordre de programmation d'enregistrement par l'adjoint de poste de télédiffusion à l'attention du terminal identifié.

Selon une variante de l'invention, le procédé de contrôle de programmation à distance est **caractérisé en ce que,** en préalable aux étapes de transfert d'ordre de programmation, le procédé comprend :
- une étape d'identification de l'utilisateur d'un terminal de communication connecté à la plateforme de programmation par reconnaissance de la combinaison de son numéro MSISDN associé à un mot de passe,
- une étape d'identification d'un adjoint de poste de télédiffusion et de récupération de son adresse IP grâce à une base de données permettant une bijection entre le numéro MSISDN de l'utilisateur d'un terminal de communication et l'adresse IP de l'adjoint de poste de télédiffusion.

Selon une autre variante de l'invention, le procédé de contrôle de programmation à distance est **caractérisé en ce que** l'étape de vérification de la possibilité d'exécution de l'ordre de programmation comprend :
- une étape d'analyse des caractéristiques de l'ordre de programmation d'enregistrement reçu,
- une étape de vérification que l'ordre de programmation d'un enregistrement est compatible avec un autre enregistrement qui aurait déjà été programmé au cours de la même plage horaire,
- une étape de vérification que le fichier qui va correspondre au flux média pour lequel l'ordre d'enregistrement est reçu, est compatible, pour le format de compression choisi, avec la mémoire disponible dans un moyen mémoire destiné à recevoir l'enregistrement,
et en ce que l'étape d'émission d'un rapport sur le statut de l'ordre de programmation d'enregistrement par l'adjoint de poste de télédiffusion à l'attention du terminal identifié consiste en :
- une étape d'émission d'une confirmation de la prise en compte de l'ordre de programmation d'enregistrement par l'adjoint de poste avec un enregistrement de l'ordre dans un moyen mémoire lorsque la compatibilité est vérifiée, ou
- une étape d'émission d'un message signalant la présence d'un conflit de programmation avec l'ordre d'enregistrement lorsqu'une incompatibilité est vérifiée, accompagnée d'une proposition de forçage de l'ordre de programmation conflictuel.

Selon une autre variante de l'invention, le procédé de contrôle de programmation à distance est **caractérisé en ce que,** lorsque l'ordre de programmation est forcé malgré la détection d'un conflit de programmation, le procédé comprend :
- une étape de mémorisation de l'ordre de programmation d'enregistrement, et
- une étape d'effacement d'un ordre de programmation d'enregistrement conflictuel inscrit au préalable dans un moyen mémoire de l'adjoint de poste, et/ou
- une étape d'effacement d'au moins un fichier du moyen mémoire.

Selon une autre variante de l'invention, le procédé de contrôle de programmation à distance est **caractérisé en ce que** le procédé comprend en préalable à l'émission d'un ordre de programmation d'enregistrement :
- une étape de recherche d'un flux média dont la diffusion par le réseau IPTV est programmée, et/ou
- une étape de recherche d'au moins une caractéristique du flux média.

Selon une autre variante de l'invention, le procédé de contrôle de programmation à distance est **caractérisé en ce que** le procédé comprend au préalable une étape d'inscription de l'utilisateur au service de contrôle de programmation qui comprend au moins une étape d'enregistrement d'une bijection entre un identifiant MSISDN et au moins un identifiant IP correspondant à un adjoint de poste de télédiffusion étape prise en charge par l'opérateur proposant le dispositif de contrôle de programmation à distance, donc transparente pour l'utilisateur.

Selon une autre variante de l'invention, le procédé de contrôle de programmation à distance est **caractérisé en ce que** le procédé comprend une étape de modification d'au moins un ordre de programmation en attente d'être exécuté, et/ou de validation et/ou de suppression d'au moins un fichier enregistré dans le moyen mémoire destiné à recevoir l'enregistrement de flux média.

L'invention, avec ses caractéristiques et avantages, ressortira plus clairement à la lecture de la description faite en référence aux dessins annexés dans lesquels :

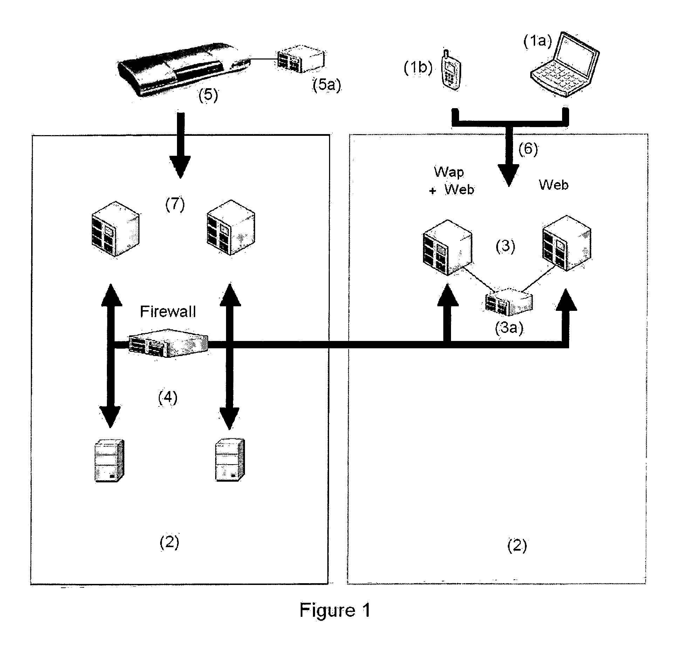

- la figure 1 représente schématiquement un exemple de réalisation du dispositif de l'invention,

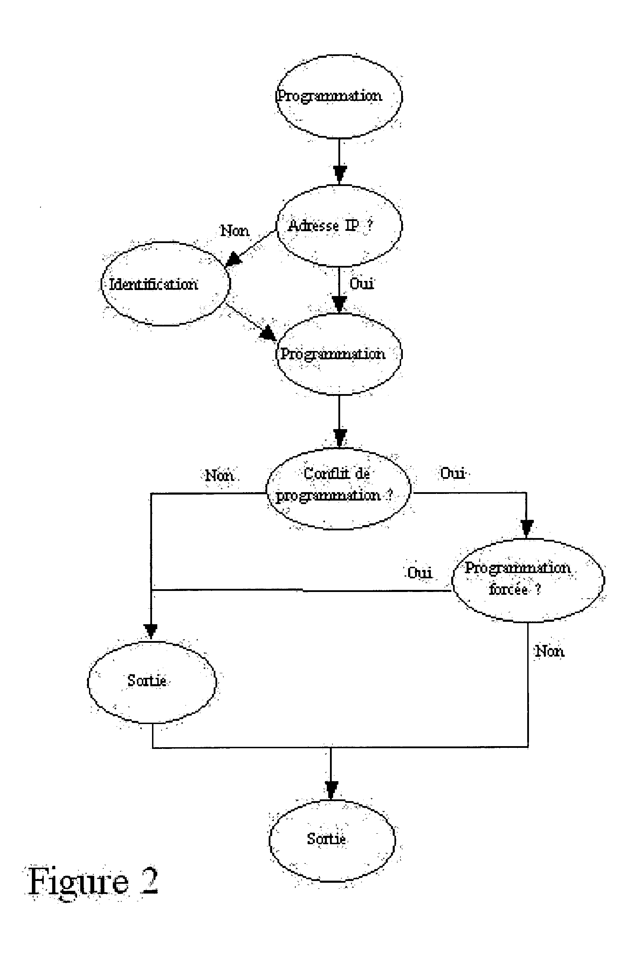

- la figure 2 représente schématiquement un exemple de procédé de programmation,

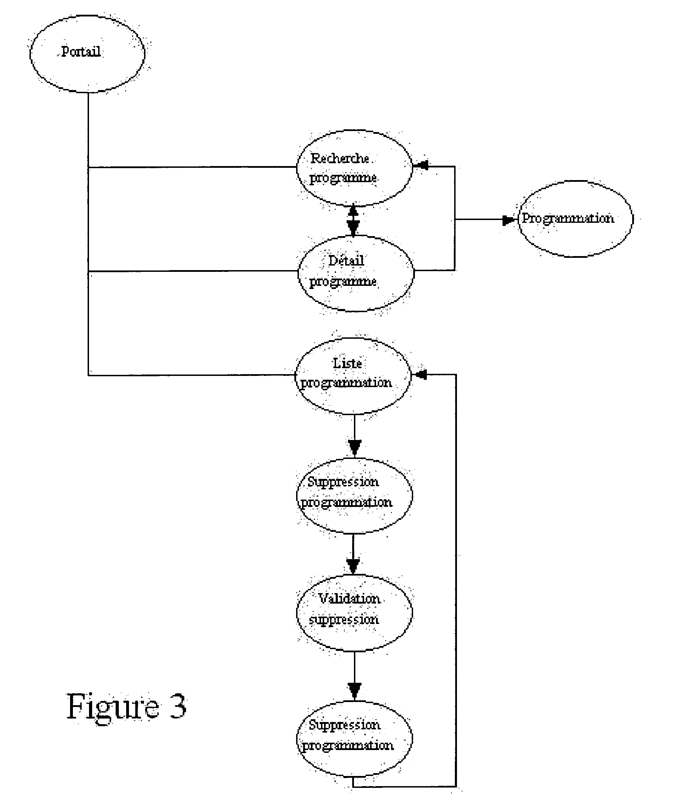

- la figure 3 représente schématiquement un exemple des successions d'écran lors de la navigation d'un utilisateur qui effectue une programmation,

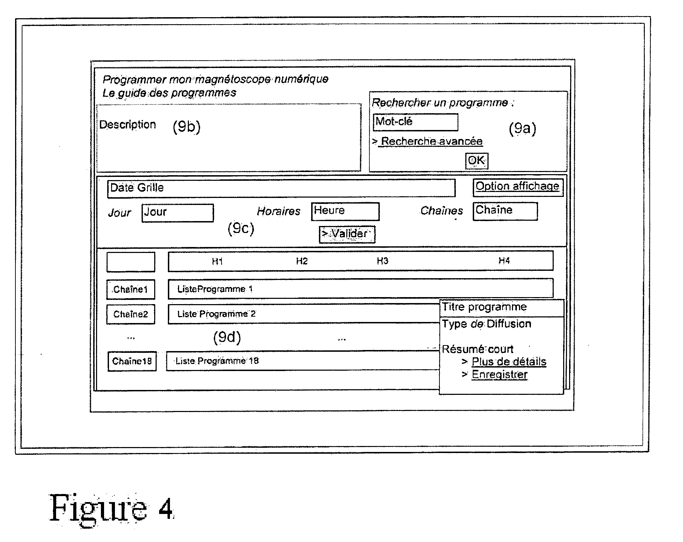

- la figure 4 représente schématiquement un exemple d'interface graphique lors de la navigation d'un utilisateur.

Il convient de noter que dans le présent document, l'expression « poste de télédiffusion » porte aussi bien sur les téléviseurs que sur les postes radio ainsi que sur tous les terminaux susceptibles de recevoir un média par un réseau IPTV (*Internet Protocol TeleVision*) et de le diffuser.

Le système de l'invention permet de réaliser un contrôle de la programmation de l'enregistrement d'un flux média, par exemple vidéo, sur un adjoint (5) de poste de télédiffusion (STB ou PVR) à partir d'un terminal (1) utilisé comme télécommande, le terminal (1) étant relié à l'adjoint (5) par l'intermédiaire d'une plateforme (2) de programmation et de communication qui intègre un ou plusieurs serveurs, ces serveurs pouvant fonctionner grâce à un logiciel par exemple de type Apache ou Tomcat, ainsi qu'un logiciel Pare-feu. Le terminal (1) peut être un ordinateur PC (*Personnal Computer*) (1a) ou un téléphone mobile (1 b). Ce terminal (1) intègre notamment un dispositif de navigation et/ou de sélection d'un élément dans au moins une base de données de la plateforme (2), ainsi qu'un moyen de commande et/ou de validation d'un ordre de programmation d'enregistrement d'un flux média.

Ce terminal (1) se trouve relié à la plateforme (2) de programmation par un accès Internet (6). Dans le cas d'un téléphone mobile (1 b), l'accès passe par un environnement mutualisé WEB - WAP (*Wireless Application Protocol*), l'interface WAP permettant un accès au réseau Internet (6) pour se connecter à la plateforme (2) de programmation. De même, l'adjoint de poste (5) ou STB est connecté et relié à la plateforme (2) de communication par l'intermédiaire d'une liaison ADSL (*Asymmetric Digital Subscriber Line*) au sein d'un réseau de communication (7) propre au fournisseur du service de programmation de l'invention. Au sein de ce réseau de communication, l'adjoint de poste (5) est identifiable par une adresse IP (*Internet Protocol*) statique. La plateforme de (2) programmation et de communication joue ainsi le rôle d'interface entre le réseau Internet (6) et le réseau (7) propre au fournisseur du service de programmation d'enregistrement, elle permet d'une part un transfert des ordres de programmation et des réponses aux ordres et d'autre part, le cas échéant, une traduction des ordres et des réponses lorsque les langages utilisés sur les deux réseaux (6, 7) sont différents.

La connexion du terminal (1) à la plateforme de programmation (2) impose l'identification de l'utilisateur du service de programmation. Cette identification est réalisée par la récupération du numéro MSISDN (*Mobile Station Integrated Service Digital network Number*) du terminal (1) de l'utilisateur lorsque que celui-ci accède à une page web qui forme le portail d'accès à la plateforme (2). Cette récupération du numéro MSISDN se réalise par une association avec un mot de passe que l'utilisateur doit fournir lors de sa connexion à la plateforme (2). Dans le cas d'une connexion depuis un téléphone mobile (1 b), le numéro MSISDN est reconnu automatiquement via l'interface WAP du terminal, l'utilisateur n'a alors plus qu'à fournir le mot de passe pour être authentifié et accéder au service. Dans le cas d'une connexion depuis un terminal fixe (1a), par exemple un ordinateur PC, l'utilisateur est alors chargé de fournir lui-même son numéro MSISDN associé au mot de passe correspondant auprès d'un dispositif d'identification unique SSO (*Single Sign On*) (3). Il convient de remarquer que le mot de passe associé au numéro MSISDN de l'utilisateur du service est défini et enregistré dans une base de données (3a) lorsque l'utilisateur s'abonne au service de programmation. L'authentification se réalise par comparaison du mot de passe fourni par l'utilisateur avec celui fourni lors de l'inscription et correspondant au numéro MSISDN dans la base de données.

La plateforme de programmation (2) comprend également un moyen de récupération (4) de l'identifiant de l'adjoint de poste (5) sur lequel une programmation doit être effectuée. Ce moyen peut être formé, par exemple, par une plateforme particulière annexe qui intègre au moins une base de données permettant à la plateforme (2) de programmation de réaliser une bijection entre un numéro MSISDN et l'adresse IP d'au moins un adjoint de poste (5). Cette correspondance se trouve également mise en mémoire dans une base de données lors de l'inscription de l'utilisateur au service de programmation. Cette base de données se trouve ainsi gérée et alimentée par le fournisseur du service de programmation d'enregistrement. L'authentification de l'utilisateur sur la plateforme (2) depuis un terminal (1) adapté permet, simultanément, de transmettre d'authentifier l'utilisateur du service de programmation et d'identifier l'adjoint de poste (5) de télédiffusion sur lequel un enregistrement est destiné à être programmé.

La connexion du terminal (1) au serveur (2) assure l'affichage d'un EPG (*Electronic Program Guide*) sur un dispositif adapté du terminal (1) pour permettre à l'utilisateur d'accéder à une page d'accueil qui forme le portail de la plateforme (2) et d'effectuer une navigation sur les pages de la plateforme (2). L'interface de présentation de l'EPG comprend des moyens (9a) de recherche d'un flux média particulier à partir d'au moins un mot clé listé dans une base de données qui est affichée ou d'un mot clé que l'utilisateur entre dans l'interface, un moyen (9b) de visualisation d'une description d'un flux média recherché, un moyen (9c) de recherche et de visualisation des flux média diffusés au cours d'au moins une période sélectionnée ou sur un canal sélectionné, un moyen (9d) de visualisation d'une liste détaillée des programmes de diffusion de flux média par canal, etc.. Cette interface de présentation permet ainsi à l'utilisateur de rechercher un flux média particulier dont la diffusion sur le réseau IPTV est programmée, de consulter des détails du programme de diffusion tels que le canal, les horaires, etc., ou encore d'accéder à différentes informations propres à l'adjoint (5) de poste identifié telles que la mémoire disponible sur le disque dur de l'adjoint (5) de poste, une liste de fichiers correspondant à des flux média déjà enregistrés sur le disque dur avec, par exemple, des caractéristiques de qualité d'enregistrement, de durée et/ou de volume de mémoire occupée sur le disque dur, une liste de flux média dont la diffusion est programmée et pour lesquels l'enregistrement est autorisé et/ou compatible avec la mémoire disponible sur le disque dur de l'adjoint (5) de poste et/ou déjà programmé, mais également différentes informations ou caractéristiques propres à chacun des flux média dont la diffusion est programmée.

La programmation ne peut débuter que lorsque l'adjoint (5) de poste a pu être identifié par son adresse IP. La programmation de l'enregistrement d'un flux média destiné à être diffusé au cours d'une période préétablie est gérée par l'utilisateur depuis son terminal (1) connecté à la plateforme (2). Lorsqu'un utilisateur déclenche un ordre sur son terminal, cet ordre est transmis par le terminal (1) à la plateforme (2) qui les transmet à l'adjoint (5) de poste de télédiffusion associé au numéro MSISDN de l'utilisateur identifié. L'adjoint (5) de poste reconnaît et analyse l'ordre de programmation d'enregistrement reçu via l'interface de communication par des moyens adaptés et vérifie que l'ordre reçu est exécutable, l'exécute et/ou retourne un statut de l'exécution de l'ordre au terminal dans un format XML (*Extensible Markup Language*), ce langage facilitant l'interopérabilité de fonctionnement entre les réseaux.

L'adjoint (5) de poste de télédiffusion comprend un dispositif (5a) de gestion des conflits de programmation qui intègre un moyen de comparaison de l'ordre de programmation d'enregistrement reçu avec au moins un enregistrement programmé dans le moyen mémoire et un moyen de comparaison de la mémoire nécessaire pour exécuter l'enregistrement de l'ordre de programmation reçu avec la mémoire disponible sur l'adjoint (5) de poste pour recevoir l'enregistrement sur le moyen mémoire. Lorsqu'un flux média est sélectionné et qu'un ordre d'enregistrement est transmis à l'adjoint (5) de poste de télédiffusion, le dispositif de gestion de conflit de programmation vérifie que l'ordre d'enregistrement n'est pas incompatible avec les capacités techniques de l'adjoint (5) de poste. Les caractéristiques de l'ordre de programmation reçu se trouvent analysées de façon à vérifier que l'enregistrement du flux média puisse avoir lieu dans les conditions demandées. Le dispositif de gestion de conflit (5a) vérifie ainsi que :
- l'ordre d'enregistrement n'est pas incompatible avec un autre enregistrement qui aurait déjà été programmé au cours de la même plage horaire,
- le fichier pour lequel l'ordre d'enregistrement est reçu, est compatible, avec un format de compression donné, avec la mémoire disponible sur un support d'enregistrement sélectionné, disque dur ou DVD.

Si l'enregistrement est compatible, l'ordre d'enregistrement se trouve programmé et une confirmation de la programmation est retournée au terminal (1) à partir duquel l'utilisateur gère la programmation de l'adjoint (5) de poste grâce à un moyen intégré au gestionnaire (5a) de conflit. Ce moyen étant un moyen de rédaction et/ou d'émission d'un rapport définissant la présence et/ou l'absence d'un conflit. En revanche, si l'enregistrement est incompatible, l'incompatibilité est signalée en indiquant le motif de l'impossibilité d'enregistrement, par exemple manque de place dans la mémoire, présence d'un autre enregistrement déjà programmé au cours de la même période, etc.. L'utilisateur peut alors forcer la programmation de l'enregistrement du flux média sélectionné entrainant alors soit la suppression totale ou partielle d'au moins une partie des enregistrements déjà programmés et qui empêchaient l'exécution de l'ordre d'enregistrement, soit la suppression d'un ou de plusieurs fichiers enregistrés dans un moyen mémoire de l'adjoint (5) de poste de télédiffusion. Les fichiers supprimés sont sélectionnés de façon arbitraire par l'adjoint (5), c'est-à-dire les fichiers enregistrés dans le moyen mémoire qui sont les plus anciens ou qui sont les premiers dans un classement par ordre alphabétique, etc.. La programmation de l'enregistrement est alors confirmée par retour d'un message qui confirme le statut de la demande. L'utilisateur peut alors quitter l'interface de la plateforme (2) de programmation.

Selon une particularité de réalisation, l'utilisateur peut intervenir lui-même depuis son terminal sur les fichiers enregistrés dans le moyen mémoire destiné à recevoir l'enregistrement pour sélectionner ceux qu'il souhaite supprimer. De même, l'utilisateur peut intervenir directement sur la liste de programmation pour supprimer et/ou valider des ordres d'enregistrement en mémoire et en attente d'exécution, chaque étape de suppression imposant une confirmation de la suppression par l'utilisateur.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Système de contrôle de programmation à distance d'au moins un adjoint (5) de poste de télédiffusion, l'adjoint étant relié à un réseau IPTV (*Internet Protocol TeleVision*) permettant la réception d'un flux média à diffuser par le poste de télédiffusion, le système comprenant au moins un terminal (1) de communication relié à un réseau de type Internet (6) par l'intermédiaire d'une interface web, **caractérisé en ce que** le système comprend au moins un serveur formant une plateforme (2) de programmation et de communication entre au moins l'adjoint (5) de poste de télédiffusion et le terminal (1) de communication qui télécommande l'adjoint (5) de poste de télédiffusion, la plateforme intégrant :
- un moyen d'identification (3) de l'utilisateur du terminal (1) de communication qui communique avec la plateforme (2),
- un moyen d'identification (4) d'un adjoint (5) de poste de télédiffusion destiné à recevoir au moins un ordre du terminal (1) de communication,
- une interface de transfert et/ou de traduction d'au moins un ordre d'enregistrement transmis par le terminal (1) de communication et des réponses de l'adjoint (5) de poste de télédiffusion aux ordres,
et **en ce que** l'adjoint (5) de poste de télédiffusion est relié à la plateforme (2) par une interface réseau (7) et communique avec le serveur au moyen d'une adresse IP (*Internet Protocol*) statique.

2. Système de contrôle de programmation à distance selon la *revendication* 1, **caractérisé en ce que** la plateforme (2) est formée par une plateforme web qui comprend une interface sur laquelle l'utilisateur du terminal (1) de communication est en mesure de pouvoir au moins :
- s'identifier, et/ou
- rechercher et/ou sélectionner un flux média dont les caractéristiques de la diffusion programmée par un média sont enregistrées dans une base de données de la plateforme comprenant l'ensemble des flux média programmés susceptibles d'être enregistrés par l'adjoint (5) de poste de télédiffusion, et/ou
- commander un ordre à exécuter par la plateforme de programmation d'un adjoint (5) de poste de télédiffusion identifié pour l'enregistrement d'un programme diffusé par un média, et/ou
- modifier dans la plateforme les ordres de programmation correspondant à l'adjoint de poste de télédiffusion en attente d'être exécuté, et/ou
- valider et/ou supprimer au moins un fichier enregistré dans le moyen mémoire destiné à recevoir l'enregistrement de flux média.

3. Système de contrôle de programmation à distance selon une des revendications 1 ou 2, **caractérisé en ce que** le moyen d'identification (3) du terminal (1) de communication est formé par un dispositif d'identification unique SSO (*Single Sign On*) qui permet la récupération du numéro MSISDN (*Mobile Station Integrated Service Digital network Number*) de l'utilisateur du terminal (1).

4. Système de contrôle de programmation à distance selon une des revendications 1 à 3, **caractérisé en ce que** le moyen d'identification (4) de l'adjoint (5) de poste de télédiffusion est formé par un dispositif intégrant une base de données permettant une bijection entre un identifiant de l'utilisateur d'un terminal (1) de communication et l'identifiant d'un adjoint (5) de poste de télédiffusion formé par son adresse IP.

5. Système de contrôle de programmation à distance selon la revendication 4, **caractérisé en ce que** la base de données est contrôlée, gérée et alimentée par l'opérateur proposant le dispositif de contrôle de programmation à distance.

6. Système de contrôle de programmation à distance selon une des revendications 1 à 5, **caractérisé en ce que** l'adjoint (5) de poste de télédiffusion intègre un dispositif de gestion (5a) des conflits de programmation associé à un moyen mémoire de l'adjoint (5) de poste de télédiffusion.

7. Terminal (1) utilisable dans un système de contrôle de programmation à distance selon une des revendications 1 à 6, le terminal comprenant au moins un moyen d'affichage d'informations, un clavier formant une interface de commande pour l'utilisateur **caractérisé en ce que** le terminal (1) comprend :
- un moyen de communication Internet avec une plateforme (2) de programmation d'un adjoint (5) de poste de télédiffusion,
- un dispositif de navigation et/ou de sélection d'un élément dans au moins une base de données de la plateforme (2),
- un moyen de commande et/ou de validation d'un ordre de programmation d'enregistrement d'un flux média.

8. Adjoint (5) de poste de télédiffusion utilisable dans un système de contrôle de programmation selon une des revendications 1 à 6, l'adjoint (5) de poste comprenant au moins une interface de connexion à un *réseau* IPTV (*Internet Protocol TeleVision*) pour la réception d'un flux média, un moyen de lecture et/ou un moyen d'enregistrement et/ou un moyen d'effacement d'un flux média sur un moyen mémoire amovible ou intégré à l'adjoint de poste de télédiffusion, **caractérisé en ce que** l'adjoint de poste de télédiffusion comprend :
- une interface de communication formée par une connexion avec un réseau ADSL (Asymmetric Digital Subscriber Line) et identifiée par une adresse IP (Internet Protocol) statique,
- un moyen mémoire pour stocker les enregistrements programmés,
- un moyen de reconnaissance et d'analyse d'ordres de programmation d'enregistrement reçus via l'interface de communication,
- un dispositif (5a) de gestion des conflits de programmation.

9. Adjoint (5) de poste de télédiffusion selon la revendication 8, **caractérisé en ce que** le dispositif de gestion (5a) de conflits de programmation comprend :
- un moyen de comparaison de l'ordre de programmation d'enregistrement reçu avec au moins un enregistrement programmé dans le moyen mémoire,
- un moyen de comparaison de la mémoire nécessaire pour exécuter l'enregistrement de l'ordre de programmation reçu avec la mémoire disponible sur l'adjoint (5) de poste pour recevoir l'enregistrement sur le moyen mémoire,
- un moyen de rédaction et/ou d'émission d'un rapport définissant la présence et/ou l'absence d'un conflit.

10. Plateforme (2) de programmation utilisable dans un système de contrôle de programmation selon une des revendications 1 à 6, formée par un ou plusieurs serveurs, **caractérisé en ce que** la plateforme comprend :
- une interface de communication formée par une connexion Internet avec au moins un terminal (1) manipulé par un utilisateur,
- une interface de communication formée par une connexion via un réseau ADSL avec au moins un adjoint (5) de poste de télédiffusion,
- un dispositif de reconnaissance du destinataire d'un ordre de programmation d'enregistrement à partir de l'identification de l'utilisateur émetteur de l'ordre, ce dispositif comprenant au moins un moyen d'identification (3) de l'utilisateur du terminal (1) de communication qui communique avec la plateforme (2) et un moyen d'identification (4) d'un adjoint (5) de poste de télédiffusion intégrant une base de données permettant une bijection entre l'identifiant de l'utilisateur du terminal (1) et l'identifiant d'un adjoint (5) de poste de télédiffusion formé par son adresse IP.

11. Plateforme (2) de programmation selon la revendication précédente, **caractérisée en ce que** la plateforme intègre un flux EPG (*Electronic Program Guide*) formant une interface sur laquelle un utilisateur du terminal (1) de communication est susceptible de :
- s'identifier, et/ou
- rechercher et/ou sélectionner un flux média dont les caractéristiques de la diffusion programmée par un média sont enregistrées dans une base de données de la plateforme (2) comprenant l'ensemble des flux média programmés susceptibles d'être enregistrés par un adjoint (5) de poste de télédiffusion, et/ou
- commander un ordre à exécuter par la plateforme de programmation d'un adjoint (5) de poste de télédiffusion identifié pour l'enregistrement d'un programme diffusé par un média, et/ou
- modifier dans la plateforme les ordres de programmation correspondant à l'adjoint de poste de télédiffusion en attente d'être exécuté, et/ou
- valider et/ou supprimer au moins un fichier enregistré dans le moyen mémoire destiné à recevoir l'enregistrement de flux média.

12. Plateforme (2) de programmation selon la revendication précédente, **caractérisée en ce que** l'interface comprend :
- un moyen (9a) de visualisation d'une recherche d'un flux média particulier à partir d'au moins un mot-clé,
- un moyen (9b) de visualisation d'une description d'un flux média recherché,
- un moyen (9c) de recherche et de visualisation des flux média diffusés au cours d'au moins une période sélectionnée ou sur un canal sélectionné,
- un moyen (9d) de visualisation d'une liste détaillée des programmes de diffusion de flux média par canal.

13. Procédé de contrôle de programmation à distance mettant en jeu un système de contrôle de programmation à distance selon au moins une des *revendications* 1 à 7, **caractérisé en ce que** le procédé comprend au moins :
- une étape d'émission d'au moins un ordre de programmation d'un enregistrement depuis un terminal (1) connecté et identifié par la plateforme (2) de programmation et destiné à la plateforme (2),
- une étape de transfert de l'ordre de programmation d'enregistrement à l'adjoint (5) de poste de télédiffusion,
- une étape de vérification de la possibilité d'exécution de l'ordre de programmation par le dispositif (5a) de gestion de conflits de programmation,
- une étape d'émission d'un rapport sur le statut de l'ordre de programmation d'enregistrement par l'adjoint (5) de poste de télédiffusion à l'attention du terminal identifié.

14. Procédé de contrôle de programmation à distance selon la revendication 8, **caractérisé en ce que,** en préalable aux étapes de transfert d'ordre de programmation, le procédé comprend :
- une étape d'identification de l'utilisateur d'un terminal (1) de communication connecté à la plateforme (2) de programmation par reconnaissance de la combinaison de son numéro MSISDN associé à un mot de passe,
- une étape d'identification d'un adjoint (5) de poste de télédiffusion et de récupération de son adresse IP grâce à une base de données permettant une bijection entre le numéro MSISDN de l'utilisateur d'un terminal de communication et l'adresse IP de l'adjoint (5) de poste de télédiffusion.

15. Procédé de contrôle de programmation à distance selon une des revendications précédentes, **caractérisé en ce que** l'étape de vérification de la possibilité d'exécution de l'ordre de programmation comprend :
- une étape d'analyse des caractéristiques de l'ordre de programmation d'enregistrement reçu,
- une étape de vérification que l'ordre de programmation d'un enregistrement est compatible avec un autre enregistrement qui aurait déjà été programmé au cours de la même plage horaire,
- une étape de vérification que le fichier qui va correspondre au flux média pour lequel l'ordre d'enregistrement est reçu, est compatible, pour le format de compression choisi, avec la mémoire disponible dans un moyen mémoire destiné à recevoir l'enregistrement,
et **en ce que** l'étape d'émission d'un rapport sur le statut de l'ordre de programmation d'enregistrement par l'adjoint (5) de poste de télédiffusion à l'attention du terminal (1) identifié consiste en :
- une étape d'émission d'une confirmation de la prise en compte de l'ordre de programmation d'enregistrement par l'adjoint (5) de poste avec un enregistrement de l'ordre dans un moyen mémoire lorsque la compatibilité est vérifiée, ou
- une étape d'émission d'un message signalant la présence d'un conflit de programmation avec l'ordre d'enregistrement lorsqu'une incompatibilité est vérifiée, accompagnée d'une proposition de forçage de l'ordre de programmation conflictuel.

16. Procédé de contrôle de programmation à distance selon la revendication précédente, **caractérisé en ce que,** lorsque l'ordre de programmation est forcé malgré la détection d'un conflit de programmation, le procédé comprend :
- une étape de mémorisation de l'ordre de programmation d'enregistrement, et
- une étape d'effacement d'un ordre de programmation d'enregistrement conflictuel inscrit au préalable dans un moyen mémoire de l'adjoint (5) de poste, et/ou
- une étape d'effacement d'au moins un fichier du moyen mémoire.

17. Procédé de contrôle de programmation à distance selon une des revendications précédentes, **caractérisé en ce que** le procédé comprend en préalable à l'émission d'un ordre de programmation d'enregistrement :
- une étape de recherche d'un flux média dont la diffusion par le réseau IPTV est programmée, et/ou
- une étape de recherche d'au moins une caractéristique du flux média,

18. Procédé de contrôle de programmation à distance selon une des revendications précédentes, **caractérisé en ce que** le procédé comprend au préalable une étape d'inscription de l'utilisateur au service de contrôle de programmation qui comprend au moins une étape d'enregistrement d'une bijection entre un identifiant MSISDN et au moins un identifiant IP correspondant à un adjoint de poste de télédiffusion, étape prise en charge par l'opérateur proposant le dispositif de contrôle de programmation à distance, transparente pour l'utilisateur.

19. Procédé de contrôle de programmation à distance selon une des revendications précédentes, **caractérisé en ce que** le procédé comprend une étape de modification d'au moins un ordre de programmation en attente d'être exécuté, et/ou de validation et/ou de suppression d'au moins un fichier enregistré dans le moyen mémoire destiné à recevoir l'enregistrement de flux média.
